# EUROPEAN PATENT APPLICATION

(11) **EP 2 236 260 A1**
(43) Date of publication of application: **06.10.2010**
(21) Application number: 10380042.1
(22) Date of filing: 23.03.2010
(51) Int. Cl.: B28D 1/08, B23D 57/00

(54) **Stone cutting machine**

(30) Priority: 31.03.2009 ES 200900632 U
(71) Applicant: Aguilar Gonzalez, Juan, 11140 Coni (Cadiz) (ES)
(72) Inventor: Aguilar Gonzalez, Juan, 11140 Coni (Cadiz) (ES)
(74) Representative: Gil-Vega, Victor

(57) **Abstract**

Stone cutting machine built based on an inverted "U" shaped framework (1), said framework (1) incorporating a geared motor (5) that activates a diamond cord (6) which forms a closed circuit, and which is displaceable through a series of pulleys (7) throughout the entire framework (1), in such a way that at the mouth of the framework (1) there is a cutting "edge"; the framework is joined to a telescopic horizontal arm (9) associated to a vertical column (10) that is vertically displaceable and which is mounted over a lower chassis (11), integrated on the platform of a vehicle, that includes horizontal displacement guides for the same.

## Description

### OBJECT OF THE INVENTION

The present invention refers to a machine that has especially been conceived to allow the cutting of stone, both in the quarry as in any other place.

The object of the invention is to provide a machine, with reduced weight, that will allow cutting large size stones, and whose special structure allows varying the direction of cutting according to the profile of the desired block.

### BACKGROUND OF THE INVENTION

It is common knowledge that, until now, cutting machines were used to cut stones in a quarry, which could be assisted by a bridge to guide the cut that included a gearbox to drive a diamond circular saw, which did the actual cutting.

Therefore, the depth of the cut would be limited by the diameter of the saw blade, in such a way that even though there are large diameter saw blades on the market, sometimes these are not sufficient, and they are very heavy, thus requiring very powerful equipment to activate them, with equally high manufacturing costs.

In addition there is an added problem which is the fact that when using the mentioned cutting machines it is impossible to change the cutting direction, limiting these cuts to straight ones.

### DESCRIPTION OF THE INVENTION

The stone cutting machine proposed by the invention fully and satisfactorily resolves the abovementioned problem, in all the mentioned aspects, thanks to a simple and highly efficient structuring.

To that effect, the cutting machine has a diamond-cord saw blade, instead of the discoid blade, which closed at its ends defines a polygon in which the vertexes are placed over corresponding pulleys, so that the mentioned cord turns through the circuit of pulleys by means of a geared motor located on the framework, which has an inverted "U" shape, and on which the mentioned series of pulleys is located, so that the dimensions of the side branches and the central branch of the said "U" shaped framework, give us the maximum width and depth dimensions of the cuts to be made in the stone.

As the "U" shaped framework is obtained from metallic profiles, the same could have larger dimensions than those of conventional cutting machines, without using excessively heavy machines.

The mentioned "U" shaped framework will be mounted on a telescopic column, by means of a horizontal arm, this column will allow its vertical displacement, and consequently the regulation of the cut in that vertical direction, and said vertical telescopic column will be located below on a chassis on which there are a series of horizontal guides over which, with the use of the corresponding activation mechanisms, the mentioned column is horizontally displaced, so that, by means of this horizontal displacement of the column, and the vertical displacement of the framework, the cutting direction can be modified at a certain point, according to the geometry of the piece to be cut.

Optionally the middle branch of the "U" shaped framework can be made from telescopic arms, assisted by the corresponding hydraulic mechanisms, in order to allow varying the cutting area width of the machine, and to which a series of displaceable pulleys is associated in order to guarantee the correct tautening of the diamond cord at all times, assuring that the portion of the diamond cord corresponding to its cutting area between the two ends of the "U" shaped frame is adequately taut at all times for a correct functioning.

Lastly, said chassis, on which the telescopic column, where the cutting framework is set, can be horizontally displaced, can be integrated onto diverse types of vehicles, or on a specially designed mobile platform without that affecting the essence of the invention.

### DESCRIPTION OF THE DRAWINGS

To complement the above description and with the aim of a better understanding of the characteristics of the invention, in accordance with a preferential example of the practical make-up of the same, there is a series of illustrative but not limitative drawings attached as part of the mentioned description, which represent the following:
Figure 1.- Shows a front view of a stone cutting machine made in accordance with the object of this invention.
Figure 2.- Shows a side view of the same machine.

### PREFERRED EMBODIMENT OF THE INVENTION

The indicated drawings show how the proposed stone cutting machine is built from a "U" shaped framework (1), made of metallic profiles, where there is a middle branch (2) and two side branches (3) in this case defined by several metallic profiles (4) fixed between each other to form a trapezoid, with a geared motor (5) on one of the mentioned side branches (3) that activates a diamond cord (6) that has a closed circuit, and that passes through several pulleys (7), being strongly tautened, so that at the mouth of the "U" shaped framework (1) there is a cutting edge, caused by the high speed movement of the diamond cord (6).

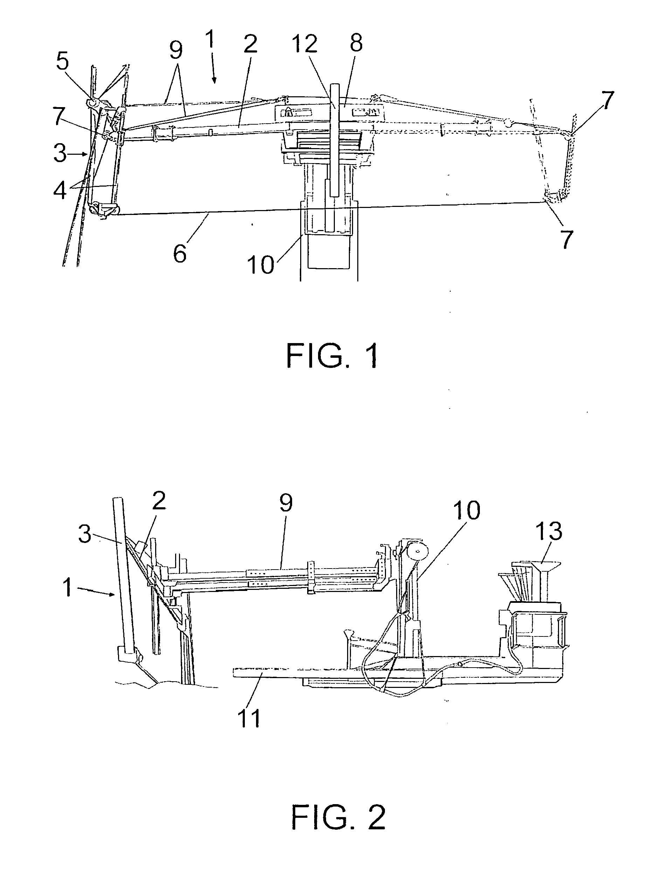

Just as is shown in figure 1, at the intermediate area of the middle branch (2) there is a reinforcement (8) that acts as a tensor fixing point (9) related to the side branches (3), by means of which there is a stronger structural rigidness of the device.

Now observing figure 2, here we see how the mentioned reinforcement (8) is joined to a horizontal arm (9) that is associated with a vertical, telescopic column (10) and associated to the corresponding mechanisms for activating the same, by means of which the vertical displacement of the framework (1) can be regulated, and consequently the vertical depth of the cut caused by the diamond cord (6). This whole group is assembled on a lower chassis (11), which has horizontal displacement guides for the vertical column (10), by means of the corresponding pneumatic or hydraulic activating mechanisms, so that horizontal and vertical displacement of the framework (1) is controlled to allow cuts of very diverse geometrics.

Returning to figure 1, it shows how the reinforcement (8) can include a rule (12) to limit the amount of vertical penetration of the cutting element in the stone to be cut, even though, the proposed invention machine can be assisted by a programmable robot through which the cutting parameters can be introduced, that way limiting the horizontal and vertical displacements of the framework (1).

Lastly, and as was previously mentioned, the lower chassis (11) can be integrated onto the platform of an appropriate vehicle, or it can be independent, in this case having the means (13) for powering the different hydraulic or pneumatic circuits for activating the mechanisms that vertically and horizontally displace the framework (1).

## Claims

1. Stone cutting machine, **characterised in that** it is built based on an inverted "U" shaped framework (1), incorporating said framework a geared motor (5) that activates a diamond cord (6) which forms a closed circuit, and which is displaceable through a series of pulleys (7) throughout the entire framework, in such a way that at the mouth of the framework there is a cutting "edge"; the framework is joined to a horizontal arm (9) associated to a vertical column (10) that is vertically displaceable and which is mounted over a lower chassis (11), that includes horizontal displacement guides for the same.

2. Stone cutting machine, according to claim 1, **characterized in that** both the vertical column (10) and the horizontal arm (9) are telescopic.

3. Stone cutting machine, according to claim 1, **characterized in that** the lower chassis (11) can be integrated on the platform of a vehicle or become part of a specially designed mobile platform for that effect.

4. Stone cutting machine, according to claim 1, **characterized in that** the middle branch of the "U" shaped framework (1) is built from two telescopic arms, assisted by the corresponding hydraulic mechanisms, which has a series of displaceable pulleys (7), over which the diamond cord (6) passes, acting as tautening elements of the mentioned cord regardless of the extension or retraction of the telescopic arms of the framework.
